# EUROPEAN PATENT SPECIFICATION

(11) **EP 2 293 665 B1**
(45) Date of publication and mention of the grant of the patent: **21.12.2011**
(21) Application number: 09766289.4
(22) Date of filing: 18.06.2009
(51) Int. Cl.: A01G 3/06

(54) **AN IMPROVED EDGE-TRIMMER WITH A DOUBLE-JOINTED EXTENSIBLE HANDLE**
VERBESSERTER KANTENTRIMMER MIT DOPPELT GEGLIEDERTEM, ERWEITERBAREM GRIFF
COUPE-BORDURES AMÉLIORÉ AVEC UNE POIGNÉE EXTENSIBLE À DOUBLE ARTICULATION

(30) Priority: 20.06.2008 IT MI20081125
(43) Date of publication of application: 16.03.2011
(73) Proprietor: Codeluppi, Lelio, 42023 Cadelbosco Sopra (Reggio Emilia) (IT)
(72) Inventor: Codeluppi, Lelio, 42023 Cadelbosco Sopra (Reggio Emilia) (IT)
(74) Representative: Gotra, Stefano
(86) International application number: PCT/IB2009/052611
(87) International publication number: WO 2009/153752

(56) References cited:
- US-A- 2 062 820
- US-A1- 2004 231 166
- US-B1- 6 324 764

## Description

### Technical Field

The invention relates to an edge-trimmer, i.e. a type of tool widely used by those working in the area of maintaining green spaces in parks and gardens, and more precisely, the invention relates to an edge-trimmer of a portable and motorised type, constituted by a tool which is carried and completely projectingly supported by the operator, being a tool without wheels or another type of support for the weight of the tool.

The tool is provided with an orientable cutting head which can be arranged in a plurality of differently-inclined planes with respect to a single reference plane, generally a plane which is horizontal to the ground.

### Background Art

Tools of this type available on the market are many and varied, but thanks to their particular mode of use all of them are provided with a substantially common structure.

In particular they comprise an elongate rod provided at an end thereof with a grip so that they can be handled and manoeuvred by the operator, and a cutting tool located at the opposite end. The cutting tool comprises a rotating head supporting a blade which rotates in an inclined plane, generally having a variable angle with respect to the axis of the end of the rod on which the blade is mounted; alternatively the cutting tool comprises a spool of a wire element, generally nylon or another similar material, which is set in rotation by the rotating head. By effect of the speed of rotation and the centrifugal force applied to the end of the wire, the wire behaves as an effective cutting blade against the vegetation (grass, bushes, slim shrubs, etc.) that it encounters during the movement of the trimmer. When the end of the wire breaks due to wear following prolonged use, the spool dispenses the necessary quantity of wire to restore the tool to functionality.

The rotation head is set in movement by a motor which can be of the electric type or can be an internal combustion engine, or any other convenient type; the motor can be arranged on the end of the rod where the rotating head is mounted; indeed in these cases the rotating head is often the motor itself, or it can be mounted in proximity of the grip, transmitting its rotation movement to the rotation head via a transmission device, for example a string or mechanical joints.

An indispensable condition is that the tool must be light in order to guarantee its manoeuvrability.

During working, the cutting plane must take on various positions with respect to the horizontal plane on which the operator moves, in order to be able to cut flat on a meadow, variously on inclined grassy edges, vertically or even upturned on hedges, and has to perform tidying operations around lawns or on tree trunks and the like.

Notwithstanding the above, a particularly delicate and unsatisfactory aspect of the known tools relates to the possibility of varying the inclination of the cutting plane with respect to the axis of the shaft of the grip. The possibility of the varying the inclination of the rotation axis of the rotating head with respect to the axis of the shaft requires coupling devices between the shaft and the rotating head which are heavy and complex, such as to negatively influence the weight of the tool and the facility of manoeuvring thereof, as well as significantly limiting the possibilities of orientating the cutting plane connected to the rotating head axis.

US patent n° 6,324,764 attempted to resolve the problem with a two-piece shaft, one straight shaft connected to the grip and bearing the motor of the tool, and another bent shaft having an end which is coaxial and connected rotatably to the free end of the first piece, the opposite end being provided with a variable-inclination joint connected to the rotating head and thus to the cutting tool.

This solution too has however not advantageously solved the problem; in particular it has left practically untouched the difficulties connected to the presence of a connecting joint between the rotating head and the end of the variable-inclination support shaft.

The applicant has found that the above-mentioned problems might be resolved with a structurally-improved edge-trimmer, lighter, more easily manoeuvrable with less physical exertion and more versatile inasmuch as it is provided with a greater number of cutting planes with respect to known tools of the same type.

In its more general aspect, the present invention relates to a trimmer provided with a cutting tool which is fixed with respect to the axis of the end of the support shaft.

In a special aspect, the invention relates to a trimmer as disclosed in the first claim.

### Disclosure of Invention

The invention will more clearly emerge from the following description and with the aid of the accompanying figure of the drawing, which is provided exclusively by way of non-limiting example, as other realisations are however possible, in respect of and in the ambit of the definition of the trimmer according to the claims that follow.

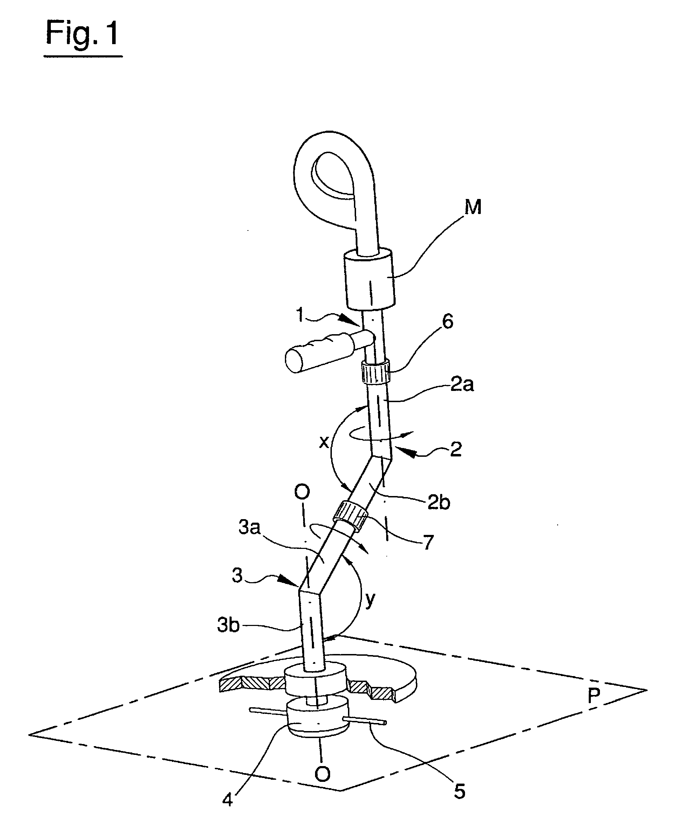

Figure 1 is a schematic view of the trimmer of the invention in a preferred embodiment thereof, which has been shown to be very convenient for trimming grass, leaves, shrubs and small trunked plants, whatever the inclination of the lie plane on which they grow with respect to the horizontal plane of the terrain, and on which the trimming is to be performed.

Substantially, the trimmer comprises a support shaft connected at an end thereof to a cutting tool, and at the other end thereof to a grip for enabling use of the trimmer by an operator. A motor mounted on the shaft produces the activating of the cutting tool. The shaft is an elongate element having three portions 1, 2 and 3 connected to one another in a way which will be described herein below. The upper portion 1 is connected to an intermediate portion 2 comprising two sections 2a and 2b which are inclined with respect to one another and meet at a vertex which defines the angle x of reciprocal inclination. The extent of the angle x is preferably comprised between 30° and 70°.

According to the invention, the first section 2a of the intermediate portion is connected to the upper portion 1, coaxially and rotatably with respect to the upper portion through an angle of 360°; the free rotation of the first section 2a with respect to the upper portion 1 can be blocked in any position by means of any device from among those commonly known to experts in the field, for example a threaded ferrule 6, but preferably comprises at least two predetermined blocking positions with respect to the upper portion 1 arranged preferably at 180° to one another. For a greater number of predetermined blocking positions the angular spacing between the positions is advantageously varied in equal angles or in different angles. The intermediate portion 2 is connected to a final portion 3 comprising two sections 3a and 3b which are reciprocally inclined and which meet at a vertex defining the angle y of reciprocal inclination. The extent of the angle is preferably comprised between 30° and 70°.

With the invention, the first section 3a of the final portion is connected to the second section 2b of the intermediate portion 2 coaxially and rotatably with respect thereto; the free rotation of section 3a with respect to section 2b of the intermediate portion 2 can be blocked in any position by means of any device from among the many known to technical experts in the field, for example a threaded ferrule 7, but preferably comprises at least four blocking positions with respect to section 2b, preferably arranged at 90° to one another. For a different number of blocking positions the angular spacing between the positions is advantageously stepped either equally or variously. The displacement between the various angular positions of section 2a with respect to portion 1 and section 3a with respect to section 2b is preferably done by unblocking the blocking device and manually rotating one section with respect to another. In a different embodiment of the invention the displacement between the various angular positions is performed automatically or semi-automatically.

The free end of the final portion, i.e. of section 3b, is connected to the cutting tool by means of a suitable rotating head 4.

In a preferred embodiment of the invention the upper, intermediate and final portions of the shaft are tubular elements connected to one another telescopically. The material constituting the tubular elements is chosen from among the materials which contemporaneously offer high mechanical resistance and great lightness, for example aluminium or carbon fibre.

The cutting plane p exhibits a fixed inclination with respect to the axis O-O of the end of the section 3b; preferably the inclination is of 90°, i.e. the cutting plane p is perpendicular to the end of section 3b.

The cutting tool 5 is selected according to the type of service the trimmer is prevalently intended for, according to the total weight of the trimmer and its total cost. It can be a rotating blade but is preferably a wire tool.

The activating motor M of the tool is preferably selected from between an internal combustion engine, for example a 35cc motor and preferably not above 50cc, which gives the trimmer the maximum level of freedom of movement, or an electric motor, for example one having between 50 and 100 Watts of power, which however has the constraint of needing a supply cable for connecting the motor to the electrical source.

The motor M for activating the cutting tool, whichever type of motor is chosen, is preferably mounted on the upper portion 1 of the shaft in proximity of the grip and is connected to the cutting head via a wire transmission which can rotate the cutting tool in either direction.

The invention provides many and important advantages.

The trimmer is light, easy to handle and very versatile: in particular the fixed angle between the rotating head driving the cutting tool and section 3b, as well as the ability of the rotating head to rotate in either direction (clockwise and anticlockwise), obviates the need for a kinematic coupling between the two elements, which would be very complex and therefore heavy and more subject to damage and faults.

The double-jointed shaft realised with the connections 1-2a and 2b-3a means that the cutting plane can be arranged in a plurality of different positions with respect to the operator's work position; in particular, with the trimmer of the invention, the operator can remain stationary with respect to the terrain, having first chosen the most ergonomic and least tiring position, and can cut on eight different planes which are differently inclined with respect to one another. The passage from one work position into another is easily done in great safety for the operator, by temporarily stopping the rotation of the cutting tool and rotating, either manually or automatically, a sectionof the shaft with respect to an adjacent section.

The use of a wire transmission between the motor and the rotating head of the cutting tool makes the trimmer light, simple and reliable.

In the present description not all the possible structural and dimensional - alternatives to the described embodiments of the invention have been illustrated: it is not necessary to expand overly in the constructional details of the system of the invention as any technical expert, following the instructions given here, will have no difficulty in designing the most advantageous technical solution, selecting suitable materials and sizes therefor.

## Claims

1. An edge-trimmer for trimming grass, leaves, shrubs and small trunked plants, comprising a cutting tool, a shaft connected at one of ends thereof to the cutting tool for supporting and moving the tool, a grip which is solidly constrained to an opposite end of the shaft in order to enable an operator to use the trimmer and a motor (M) connected to the shaft for activating the cutting tool, the shaft comprising an upper portion (1) which is solidly constrained to the grip and an intermediate portion (2) which is bent by an angle into two sections which meet at a vertex, **characterised in that** a first section (2a) of the intermediate portion (2) is connected to the upper portion coaxially and freely rotating with respect thereto, a second section (2b) of the intermediate portion (2) is connected to a final portion (3) which is bent at an angle, an end of which final portion (3) is connected to the second section (2b) of the intermediate portion (2) coaxially and freely rotating with respect thereto, an opposite end of the final portion (3b) being connected to the cutting tool (5).

2. The trimmer of claim 1, **characterised in that** the upper portion, the intermediate portion (2) and the final portion (3) of the shaft are tubular elements telescopically connected to one another.

3. The trimmer of claim 1, **characterised in that** the intermediate portion (2) comprises two predetermined blocking positions with respect to the upper portion, which blocking positions are located at a step of 180° from one another.

4. The trimmer of claim 1, **characterised in that** the angle (x) between the first section (2a) and the second section (2b) of the intermediate portion is comprised between 30° and 70°.

5. The trimmer of claim 1, **characterised in that** the final portion comprises four predetermined blocking positions with respect to the intermediate portion (2), which blocking positions are located at steps of 90° from one another.

6. The trimmer of claim 1, **characterised in that** the angle (y) between the first section (3a) and the second section (3b) of the final portion is comprised between 30° and 70°.

7. The trimmer of claim 1, **characterised in that** the cutting tool (5) is selected from between wire-cutting tools and rotating-blade tools.

8. The trimmer of claim 1, **characterised in that** the cutting tool (5) is a rotating-blade tool.

9. The trimmer of claim 1, **characterised in that** the activating motor (M) of the cutting tool (5) is located in proximity of the grip.

10. The trimmer of claims 3 and 5, **characterised in that** the blocking positions are set and fixed in mode which is selected from among manual, semi-automatic and automatic.

## Patentansprüche

1. Kantentrimmer zum Schneiden von Gras, Blättern, Büschen und niedrigstämmigen Pflanzen, umfassend ein Schneidwerkzeug, einen Schaft, der an einem seiner Enden mit dem Schneidwerkzeug verbunden ist, um das Werkzeug zu stützen und zu bewegen, einen Griff, der fest mit einem entgegengesetzten Ende des Schafts gekoppelt ist, um einem Bediener zu ermöglichen, den Trimmer und einen an den Schaft angeschlossenen Motor (M) zum Aktivieren des Schneidwerkzeugs zu benutzen, wobei der Schaft einen oberen Abschnitt (1) umfasst, der fest mit dem Griff verbunden ist, und einen Zwischenabschnitt (2), der durch einen Winkel in zwei Teilstücke gekrümmt ist, die zu einem Scheitelpunkt zusammenlaufen, **dadurch gekennzeichnet, dass** ein erstes Teilstück (2a) des Zwischenabschnitts (2) mit dem oberen Abschnitt (1) koaxial und frei drehend dazu verbunden ist, ein zweites Teilstück (2b) des Zwischenabschnitts (2) mit einem Abschlussabschnitt (3) verbunden ist, der an einem Winkel gekrümmt ist, wobei ein Ende dieses Abschlussabschnitts (3) mit dem zweiten Teilstück (2b) des Zwischenabschnitts (2) koaxial und frei drehend dazu verbunden ist und ein entgegengesetztes Ende des Abschlussabschnitts (3) mit dem Schneidwerkzeug (5) verbunden ist.

2. Trimmer nach Anspruch 1, **dadurch gekennzeichnet, dass** der obere Abschnitt, der Zwischenabschnitt (2) und der Abschlussabschnitt (3) des Schafts Rohrelemente sind, die teleskopisch miteinander verbunden sind.

3. Trimmer nach Anspruch 1, **dadurch gekennzeichnet, dass** der Zwischenabschnitt (2) zwei vorgegebene Verriegelungspositionen zum oberen Abschnitt umfasst, wobei diese Verriegelungspositionen in einem Abstand von 180° voneinander angeordnet sind.

4. Trimmer nach Anspruch 1, **dadurch gekennzeichnet, dass** der Winkel (x) zwischen dem ersten Teilstück (2a) und dem zweiten Teilstück (2b) des Zwischenabschnitts zwischen 30° und 70° eingeschlossen ist.

5. Trimmer nach Anspruch 1, **dadurch gekennzeichnet, dass** der Abschlussabschnitt vier vorgegebene Verriegelungspositionen zum Zwischenabschnitt (2) umfasst, wobei diese Verriegelungspositionen in Abständen von 90° voneinander angeordnet sind.

6. Trimmer nach Anspruch 1, **dadurch gekennzeichnet, dass** der Winkel (y) zwischen dem ersten Teilstück (3a) und dem zweiten Teilstück (3b) des Abschlussabschnitts zwischen 30° und 70° eingeschlossen ist.

7. Trimmer nach Anspruch 1, **dadurch gekennzeichnet, dass** das Schneidwerkzeug (5) aus Drahtschneidewerkzeugen und Werkzeugen mit drehendem Sägeblatt ausgewählt ist.

8. Trimmer nach Anspruch 1, **dadurch gekennzeichnet, dass** das Schneidwerkzeug (5) ein Werkzeug mit drehendem Sägeblatt ist.

9. Trimmer nach Anspruch 1, **dadurch gekennzeichnet, dass** sich der Aktivierungsmotor (M) des Schneidwerkzeugs (5) in der Nähe des Griffs befindet.

10. Trimmer nach Anspruch 3 und 5, **dadurch gekennzeichnet, dass** die Verriegelungspositionen in einer Betriebsart eingestellt und festgelegt werden, die aus der manuellen, halbautomatischen und automatischen Betriebsart ausgewählt wird.

## Revendications

1. Coupe-bordures permettant de couper l'herbe, les feuilles, les arbustes et les petites plantes à tronc, comprenant un outil coupant, un arbre relié par une des ses extrémités à l'outil coupant pour soutenir et déplacer l'outil, une poignée étant solidement fixée à une extrémité opposée de l'arbre permettant à l'utilisateur d'utiliser le coupe-bordures, et un moteur (M) relié à l'arbre pour actionner l'outil coupant, l'arbre comprenant une partie supérieure (1) solidaire de la poignée et une partie intermédiaire (2) pliée en deux sections qui se rencontrent en un sommet, **caractérisé en ce que** une première section (2a) de la partie intermédiaire (2) est reliée à la partie supérieure (1), de façon coaxiale et en rotation libre par rapport à celle-ci, une seconde section (2b) de la partie intermédiaire (2) est reliée à une dernière partie (3) qui forme un coude, une extrémité de ladite partie finale (3) est reliée à la seconde section (2b) de la partie intermédiaire (2) de façon coaxiale et en rotation libre par rapport à celle-ci, une extrémité opposée de la partie finale (3b) étant reliée à l'outil coupant (5).

2. Coupe-bordures selon la revendication 1, **caractérisé en ce que** les parties supérieure, intermédiaire (2) et finale (3) de l'arbre sont des éléments tubulaires reliés les uns aux autres de façon télescopique.

3. Coupe-bordures selon la revendication 1, **caractérisé en ce que** la partie intermédiaire (2) comprend deux positions de blocage prédéterminées par rapport à la partie supérieure, lesdites positions de blocage étant situées à 180° l'une de l'autre.

4. Coupe-bordures selon la revendication 1, **caractérisé en ce que** l'angle (x) entre la première section (2a) et la seconde section (2b) de la partie intermédiaire est compris entre 30° et 70°.

5. Coupe-bordures selon la revendication 1, **caractérisé en ce que** la partie finale comprend quatre positions de blocage prédéterminées par rapport à la partie intermédiaire (2), lesdites positions de blocage étant situées à 90° l'une de l'autre.

6. Coupe-bordures selon la revendication 1, **caractérisé en ce que** l'angle (y) entre la première section (3a) et la seconde section (3b) de la partie finale est compris entre 30° et 70°.

7. Coupe-bordures selon la revendication 1, **caractérisé en ce que** l'outil coupant (5) est sélectionné entre des outils à fil de coupe et des outils à lame rotative.

8. Coupe-bordures selon la revendication 1, **caractérisé en ce que** l'outil coupant (5) est un outil à lame rotative.

9. Coupe-bordures selon la revendication 1, **caractérisé en ce que** le moteur d'activation (M) de l'outil coupant (5) est situé à proximité de la poignée.

10. Coupe-bordures selon les revendications 3 et 5, **caractérisé en ce que** les positions de blocage sont établies et fixées selon un mode pouvant être sélectionné entre manuel, semi-automatique et automatique.
